Europäisches Patentamt

European Patent Office

Office européen des brevets

(19)

(11) Numéro de publication: **0 403 387 B1**

(12) **FASCICULE DE BREVET EUROPEEN**

(45) Date de publication de fascicule du brevet: **05.10.94**   (51) Int. Cl.5: **C04B 35/62**, C04B 35/48

(21) Numéro de dépôt: **90401654.0**

(22) Date de dépôt: **14.06.90**

(54) **Produits réfractaires fondus et coulés à forte teneur en zircone.**

(30) Priorité: **15.06.89 FR 8907943**

(43) Date de publication de la demande:
**19.12.90 Bulletin 90/51**

(45) Mention de la délivrance du brevet:
**05.10.94 Bulletin 94/40**

(84) Etats contractants désignés:
**BE DE FR GB IT LU**

(56) Documents cités:
**DE-C- 897 222**
**FR-A- 2 478 622**
**FR-A- 2 587 025**

(73) Titulaire: **SOCIETE EUROPEENNE DES PRO-
DUITS REFRACTAIRES
Les Miroirs
18, Avenue d'Alsace
F-92400 Courbevoie (FR)**

(72) Inventeur: **Zanoli, Alain Paul Bernard
Impasse du Voiturier
F-84310 Morieres les Avignon (FR)**
Inventeur: **Sertain Emmanuel, Jean-Marie
5bis place de la Bulle
F-84000 Avignon (FR)**

(74) Mandataire: **Colas, Jean-Pierre et al
Cabinet de Boisse
37, avenue Franklin D. Roosevelt
F-75008 Paris (FR)**

Rank Xerox (UK) Business Services
(3.10/3.09/3.3.3)

**Description**

L'invention concerne des produits réfractaires fondus et coulés à forte teneur en zircone.

Les produits fondus et coulés (souvent appelés électrofondus) composés en majorité d'$Al_2O_3$, de $ZrO_2$ (avec une teneur en $ZrO_2$ comprise entre 32 et 42% en poids) et de $SiO_2$ sont bien connus pour leur qualité de résistance à la corrosion dans une grande variété d'utilisations dans le domaine des fours de fusion de verre.

Cependant, dans certaines conditions, leur usage est limité ; c'est le cas dans les zones d'usures préférentielles de certains fours (par exemple les gorges) ou bien au contact de certains verres très agressifs pour les réfractaires. Ils peuvent, non plus, ne pas convenir parce qu'au contact de certains verres il sont susceptibles de générer des défauts nuisant à la qualité du verre produit. Par exemple, leur usage n'est pas optimum au contact des verres contenant de la zircone (dits alcalirésistants) car l'alumine qu'ils contiennent peut, une fois dissoute dans le verre, y faire cristalliser la zircone et perturber le fibrage de ce verre.

Le recours à des produits fondus et coulés ou à des produits frittés contenant de l'oxyde de chrome n'est pas toujours possible soit parce que la coloration du verre est indésirable soit parce que leur comportement au contact du verre considéré n'est pas conforme aux objectifs d'amélioration de la résistance à la corrosion ou d'amélioration de la qualité du verre.

L'utilisation de produits fondus et coulés à partir d'une composition constituée en majorité de zircone ($ZrO_2 > 85\%$ en poids) peut permettre de répondre, dans certains types de verre, aux exigences de haute résistance à la corrosion sans coloration du verre produit ni génération de défauts nuisibles à la qualité de ce verre.

Cependant, lors de la fabrication et de l'utilisation de produits fondus et coulés à forte teneur en zircone, les importantes variations volumiques de la zircone, au cours de la transformation allotropique réversible (phase monoclinique à phase tétragonale), peuvent provoquer d'importantes contraintes mécaniques conduisant à la fissuration voire même à la fracturation de blocs ainsi produits. Dans US-A-3 519 448, 4 336 339 et 4 705 763, les auteurs ont proposé d'introduire du $SiO_2$ ainsi que d'autres composants additionnels pour surmonter ce problème.

Ainsi, US-A-3 519 448 propose d'incorporer des oxydes de terres rares pour stabiliser la zircone.

Dans US-A- 4 336 339 et 4 705 763, le phosphore est présenté comme un composant essentiel permettant d'obtenir une phase vitreuse molle, et de fabriquer un produit moulé sans fente même avec une teneur en phase vitreuse faible. US-A-4 336 339 propose notamment l'introduction de 0,1 à 3% de phosphore exprimé sous forme $P_2O_5$ dans le produit fini tandis que US-A-4 705 763 préconise l'introduction simultanée de 0,05 à 3% de phosphore exprimé sous forme $P_2O_5$ et de 0,05 à 5% d'anhydride borique exprimé sous forme de $B_2O_3$ en compensation de la baisse des éléments alcalins maintenus inférieurs ou égaux à 0,1 %. Dans ce dernier brevet, les auteurs indiquent en plus que pour des teneurs en $ZrO_2$ supérieures ou égales à 95% en poids, il faut au moins 0,05 % de phosphore exprimé sous forme $P_2O_5$. Dans ces deux brevets, l'ajout de phosphore est par ailleurs indiqué comme facilitant la fusion des matières premières de la composition et permettant d'économiser de l'énergie de fusion. Dans US-A-4 336 339 et 4 705 763 le phosphore est donc préconisé soit seul, soit en association d'anhydride borique exprimé sous forme de $B_2O_3$, mais dans tous les cas le phosphore est présenté comme nécessaire.

En ce qui concerne les oxydes de métaux alcalins, en particulier $Na_2O$, dans ces deux brevets ils ne sont limités que par leurs valeurs supérieures. Dans US-A-4 336 339 la proportion en poids de $Na_2O$ doit être inférieure 0,1% notamment pour éviter que la résistivité électrique du produit ne soit trop basse. Dans ces deux brevets, les auteurs ne reconnaissent pas $Na_2O$ de rôle positif tel qu'ils jugeraient nécessaire de fixer une valeur minimale d'introduction.

Par ailleurs FR-A-2478622 et 2587025 décrivent des exemples comparatifs ($P_4$ et $P_8$ dans FR-A-2478622 et $P_3$ dans FR-A-2587025) qui sont exempts de $P_2O_5$ et de $B_2O_3$ et qui ont des compositions assez voisines de celles des produits de l'invention. Toutefois, il est indiqué que les articles moulés obtenus sont fissurés.

La Demanderesse a maintenant trouvé que :

- L'utilisation de phosphore seul ou en association avec l'anhydride borique n'est pas nécessaire pour obtenir des blocs de produits fondus et coulés contenant plus de 85% pondéraux de $ZrO_2$ exempts de fentes ou de fissurations préjudiciables à leur utilisation au contact de fontes de verre.

- Le phosphore n'est non seulement pas nécessaire pour la fabrication de blocs sains mais en plus provoque ou amplifie un comportement indésirable du produit lors de son utilisation industrielle et se trouve être un composant gênant pour la bonne maîtrise du procédé de fabrication du produit.

- Il est nécessaire d'introduire une teneur minimale de $Na_2O$ dans le produit pour obtenir un comportement désirable du produit réfractaire lors de son utilisation industrielle. En effet, si $SiO_2$ est l'élément déterminant de la quantité de phase vitreuse, $Na_2O$ en est l'élément déterminant de sa qualité.

- Il est nécessaire de fondre la charge de matières premières dans des conditions oxydantes pour éviter la formation de fentes ou des fendillements.

La présente invention a pour objet un produit réfractaire non fissuré obtenu par fusion dans des conditions oxydantes et coulée d'un mélange de matières premières tel que le produit obtenu ait la composition chimique pondérale moyenne, en % en poids sur la base des oxydes, suivante :

|  | Gamme large | Gamme préférée |
| --- | --- | --- |
| - $ZrO_2$ | > 92 | > 92 |
| - $SiO_2$ | 2 - 6,5 | 3 - 6 |
| - $Na_2O$ | 0,12-1,0 | 0,2-0,6 |
| - $Al_2O_3$ | 0,4-1,15 | 0,4-1,0 |
| - $Fe_2O_3$ + $TiO_2$ | < 0,55 | < 0,3 |
| - $P_2O_5$ | < 0,05 | < 0,03 |

Les produits de l'invention présentent, à teneur en zircone égale, une résistance à la corrosion au contact des principaux verres à traiter, qui est au moins équivalente à celle des produits du commerce contenant une addition de phosphore conformément aux enseignements de US-A-4 336 339 et 4 705 763.

La présence de $SiO_2$ à raison de 2 à 6,5% en poids, de préférence de 3 à 6% et celle d'$Al_2O_3$ à raison de 0,4 à 1,15% en poids, de préférence 0,4 à 1%, est nécessaire pour pouvoir, au sein d'une phase vitreuse intergranulaire, accommoder de manière efficace les variations de volume de la zircone lors de sa transformation allotropique.

Un ajout trop important de $SiO_2$ est néfaste pour ce qui est de la résistance à la corrosion. En effet l'accroissement de $SiO_2$ se fait essentiellement au dépend de $ZrO_2$ qui est la phase résistante du produit. Il est avantageux de maintenir la proportion d'alumine à une valeur n'excédant pas 1,15% en poids, de préférence 1%, pour minimiser le risque de la formation des fentes.

La proportion de $Na_2O$ doit être comprise entre 0,12 et 1,0% en poids, de préférence entre 0,2 et 0,6%.

$Fe_2O_3$ et $TiO_2$ peuvent être facultativement tolérés en une proportion n'excédant pas 0,55% en poids au total, de préférence 0,3%.

Seules des traces, introduites à titre d'impuretés, d'autres oxydes (tels que des oxydes alcalino-terreux) peuvent être présentes dans les produits de l'invention. En particulier, on n'introduit volontairement pas de phosphore dans le produit de l'invention. Toutefois, de très petites quantités de phosphore peuvent être tolérées en provenance d'impuretés présentes dans les matières premières. Dans tous les cas, cependant, la teneur pondérale en phosphore, calculée sous forme de $P_2O_5$, doit être maintenue en-dessous de 500 ppm (0,05%), de préférence en-dessous de 300 ppm (0,03%), cette teneur étant fonction, pour une fabrication industrielle de la qualité des matières premières utilisées.

La Demanderesse a, en effet constaté, au cours de leur utilisation industrielle, que certains produits à forte teneur en $ZrO_2$ (85% en poids et plus), subissent des transformations structurelles indésirables que la présence de phosphore provoque ou amplifie.

Ces transformations sont essentiellement liées à la formation de zircon par réaction entre le $SiO_2$ de la phase vitreuse et les grains de baddéléyite ($ZrO_2$) qui constituent la phase cristalline du produit. Des essais de trempe réalisés sur de petits échantillons, chauffés de façon homogène à différentes températures, ont permis de déterminer la valeur approchée de 800°C comme étant la température à partir de laquelle la formation de zircon se développe de manière sensible.

La formation de zircon s'accompagne d'une diminution de volume de l'ordre de 20%, créant au sein même du produit des contraintes mécaniques engendrant des fissurations. Ce phénomène sera qualifié de fissuration structurelle dans la suite. Un tel phénomène peut provoquer une augmentation de la corrosion du produit par pénétration du verre en fusion au travers de ces fentes ainsi que la génération dans le verre de défauts constitués de grains de baddéléyite entourés de zircon se détachant de la matrice du produit et pouvant nuire à la qualité du verre.

La formation de zircon et ses conséquences thermo-mécaniques néfastes est favorisée et amplifiée par les inévitables variations de température que connaît un four industriel du fait des variations de tirée, des veilleuses ou des arrêts possibles en cours de campagne suivis de redémarrages. Dans tous ces cas, les variations de température, dans un sens ou dans l'autre, tendent à favoriser la propagation de la microfissuration due au retrait lors de la formation éventuelle du zircon qui se traduit par une fissuration au niveau macroscopique. L'ouverture de ces fissures conduit à un gonflement du produit et éventuellement à un déchaussement des grains de $ZrO_2$. Ce phénomène a été en particulier reproduit dans des essais de corrosion de laboratoire où des échantillons de produit à tester ont été passés de la température ambiante à la température d'essai puis ramenés à la température ambiante : on assiste alors à des augmentations de volume de certains échantillons. Lors d'un essai de corrosion dans un four rotatif tournant à 6 tours/mn, on a constaté après 3 semaines d'essais, des augmentations linéaires de dimensions de l'ordre de 5% de certains échantillons accompagnées de fissurations importantes.

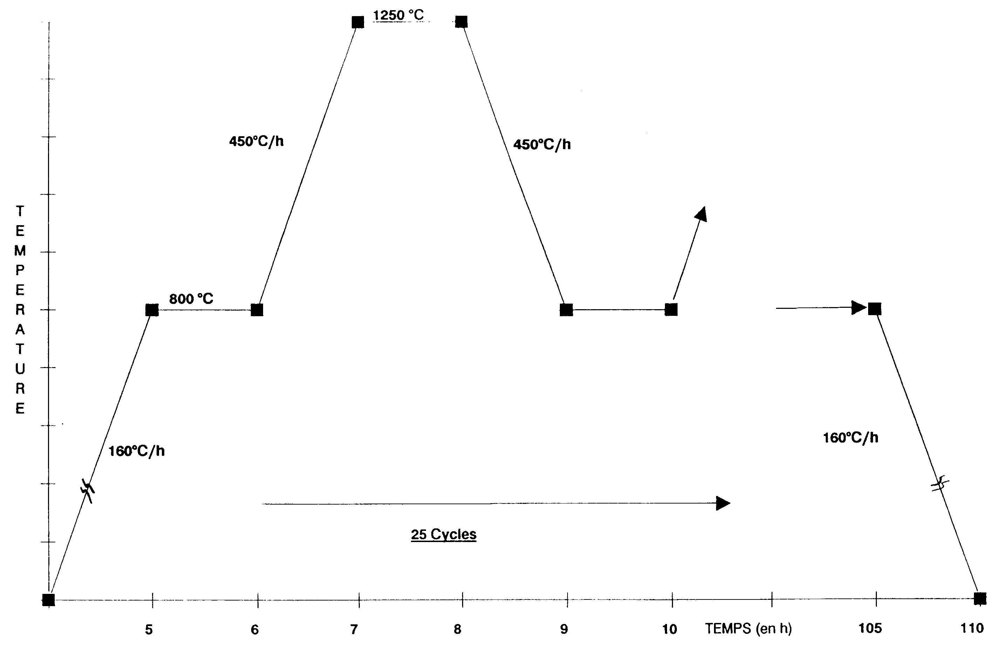

Comme il a été observé que tous les produits de la famille des électrofondus à forte teneur en $ZrO_2$ ne se comportaient pas de la même façon vis-à-vis des phénomènes de fissuration structurelle, on a mis au point un essai simple et rapide permettant de différencier de manière nette le comportement de produits donnés de la famille par rapport à d'autres produits pour cette propriété. Il s'agit d'un cyclage thermique de 25 cycles sur des échantillons de 40 mm x 40 mm x 30 mm dont l'évolution des températures au cours du temps est représenté graphiquement sur la figure unique annexée.

Les conditions de cet essai ont permis de faire apparaître dans un laps de temps court et de manière indiscutable des différences significatives entre les produits. Il est à noter que ces conditions ne sont pas représentatives d'un traitement que peut subir un produit dans la réalité industrielle mais le résultat donné par cet essai en terme de différenciation des produits est bien corrélé aux observations faites en conditions industrielles ou en conditions d'essai plus réalistes.

Ainsi, cet essai a permis de mettre en évidence l'influence néfaste du phosphore dans les produits le contenant. En effet la mesure d'augmentation de volume (dV/V) des échantillons après essai montre que l'augmentation de la teneur en phosphore, les autres éléments restant en concentrations identiques ou voisines, provoque un gonflement significativement plus important ; par observation microscopique, on a vérifié que ces mêmes produits ont des phases vitreuses plus transformées par la formation de zircon que les produits sans phosphore.

L'origine de ce phénomène se trouve certainement dans le rôle bien connu de minéralisateur du zircon que joue le phosphore partiellement dissous dans la phase vitreuse sous forme $P_2O_3$.

En plus de favoriser la transformation structurelle des produits considérés, on a trouvé que le phosphore a un rôle négatif au niveau de la teneur en métal ou en éléments réduits de ces produits.

Dans les fours de fusion électrique à électrodes en graphite utilisés pour la fusion de ce produit, les conditions d'une bonne oxydation de la masse fondue peuvent être difficiles à obtenir notamment pour les produits à forte teneur en $ZrO_2$ ce qui peut conduire à la présence de nodules d'aspect métallique dans les produits solidifiés après coulée en moule. Les conséquences négatives de la présence de métal dans des produits au contact de masses fondues de verre oxydées sont bien connues notamment en ce qui concerne la formation de bulles dommageables à la qualité du verre et à la résistance à la corrosion du produit réfractaire concerné.

Dans le cas des produits ne contenant pas de phosphore (phosphore exprimé sous forme $P_2O_5$, c'est-à-dire $P_2O_5 < 0,03\%$), lorsqu'il y a présence de nodules d'aspect métallique de petits diamètres (10 $\mu$m) dispersés dans la phase vitreuse du produit, ceux-ci sont essentiellement constitués de fer issu des impuretés contenues dans les matières premières.

Les produits contenant du phosphore dans la composition possèdent de la même façon des nodules d'aspect métallique qui sont essentiellement des nodules ayant une analyse chimique différente. Ces derniers sont des composés intermétalliques du type métal (principalement fer)-phosphore dont la stoechiométrie est par exemple dans le cas du fer de la forme $Fe_nP$ (n = 1,2,3).

Sur plusieurs échantillons, on a observé que la présence de phosphore dans le produit augmentait la quantité totale de nodules d'aspect métallique dans la phase intercristalline. En effet, on a trouvé qu'une importante proportion (environ 25%) du phosphore réagit avec le fer pour former des phosphures et ces résultats ont été trouvés pour des produits élaborés en conditions d'oxydation du bain différentes et avec des niveaux de phosphore introduits différents. Donc, toutes choses égales par ailleurs (matières premières, conditions d'élaboration), un produit contenant du phosphore contient une teneur en phase d'aspect métallique supérieure à celle d'un produit ne contenant pas de phosphore, puisqu'une proportion significative de cet élément se retrouve sous forme réduite combiné au fer métallique qui est libre dans le produit sans phosphore.

Pour minimiser la formation de modules d'aspect métalliques et aussi pour éviter la formation de fentes ou fendillements dans le produit final, il est essentiel d'opérer la fusion de la charge de matière premières dans des conditions oxydantes. Un moyen préféré d'y parvenir consiste à utiliser le procédé de fusion à l'arc long décrit dans le brevet français n° 1208577 et ses additions n°s 75893 et 82310 dont les enseignements sont incorporés ici par référence. Brièvement ce procédé consiste à utiliser un four à arc électrique dont l'arc jaillit entre la charge et au moins une électrode écartée de cette charge et à régler la longueur de l'arc pour que son action réductrice soit réduite au minimum, tout en maintenant une atmosphère oxydante au-dessus du bain en fusion et en brassant ledit bain, soit par l'action de l'arc lui-même, soit, de préférence, en faisant barboter dans le bain un gaz oxydant (air ou oxygène, par exemple) ou encore en ajoutant au bain des substances dégageant de l'oxygène telles que des peroxydes.

Si la présence de $P_2O_5$ est dommageable à l'utilisation de tels produits au contact de masses fondues de verre, elle l'est également au bon déroulement de la fabrication industrielle des produits considérés.

En effet, dans le cas de fabrication en four de fusion électrique de ce type de réfractaires, au cours de la fusion le phosphore peut se combiner au fer pour former des phosphures de fer dont la densité est supérieure à celle du bain fondu et qui se déposent par décantation sur la couche de garnissage du four. Si ces phosphures métalliques entrent en contact avec la cuve métallique, le courant électrique peut être échangé entre le bain fondu et la cuve, créant des points chauds pouvant entraîner son perçage. Ces cuves étant munies d'un refroidissement à l'eau, les risques, lors de ces fusions, deviennent alors très grands.

Lors de la fusion des charges de matières premières, on assiste à un fort envolement de phosphore qui se condense en formant de l'acide phosphorique sur toutes les parties métalliques froides situées au-dessus du liquide en fusion ; on observe alors une corrosion qui peut être importante de toutes ces parties émergées. Cette corrosion engendre alors un surcoût d'entretien des installations non négligeable et nuit à leur sécurité de fonctionnement.

Par ailleurs, le phosphore ($P_2O_5$) est généralement introduit soit sous forme de phosphate d'alumine, soit sous forme de phosphate de Na. Aux températures élevées d'élaboration, on constate une volatilisation de l'une ou l'autre de ces formes que l'on peut évaluer à environ 90% en poids. A ce niveau, la volatilité ne peut être totalement reproductible dans l'ambiance d'un four électrique, et entraîne donc une non reproductibilité des analyses chimiques du produit fini en ce qui concerne notamment les teneurs en alumine et en $Na_2O$. Un contrôle des teneurs de ces deux composants et notamment de $Na_2O$ est pourtant essentiel.

En effet, $Na_2O$ joue le rôle d'inhibiteur dans la réaction de transformation zircone + silice ---> zircon, phénomène mis en évidence lors des essais de cyclage thermique décrits ci-dessus.

Les exemples non limitatifs suivants sont donnés dans le but d'illustrer l'invention.

Dans ces exemples, on a employé les matières premières suivantes :

- la zircone de type CC10, vendue par la Demanderesse, dont l'analyse moyenne est , en % en poids :

| | |
|---|---|
| $ZrO_2$ + $HfO_2$ | = 98,5 |
| $SiO_2$ | = 0,5 |
| $Na_2O$ | = 0,2 |
| $Al_2O_3$ | = 0,1 |
| $TiO_2$ | = 0,1 |
| $Fe_2O_3$ | = 0,05 |
| CaO | = 0,05 |
| $P_2O_5$ | = 0,04 |
| MgO | = 0,03 |

sous forme de particules ayant un diamètre médian de 3,9 $\mu$m.
- Le sable de zircon à 33% de silice .
- L'alumine de type AC44 vendue par la Société Péchiney et titrant 99,4% d'$Al_2O_3$ .
- Le carbonate de Na à 58,5% de $Na_2O$.

Exemples 1 à 3 et exemples comparatifs A à C

On a préparé des petits blocs réfractaires dont les caractéristiques étaient les suivantes :

| | |
|---|---|
| - Format : | 200 x 400 x 150 mm. |
| - Moulage : | en moule graphite. |
| - Recuisson : | en alumine. |
| - Mode de fusion : | fusion au four à arc long comme |

décrit dans le brevet français 1 208 577 et ses additions n° 75893 et 83310.

Le tableau suivant présente les analyses chimiques moyennes de différents blocs :

| Exemples | Composition chimique, en % en poids | | | | | | |
|---|---|---|---|---|---|---|---|
| | $ZrO_2$ | $SiO_2$ | $Al_2O_3$ | $Na_2O$ | $TiO_2$ | $Fe_2O_3$ | $P_2O_5$ |
| 1 | 93,1 | 5,47 | 0,86 | 0,28 | 0,19 | 0,11 | <500ppm |
| A | 94,6 | 4,1 | 0,69 | 0,2 | 0,2 | 0,1 | 0,12 |
| 2 | 95,4 | 3,45 | 0,65 | 0,3 | 0,1 | 0,1 | <500ppm |
| B | 95,2 | 3,55 | 0,55 | 0,3 | 0,1 | 0,1 | 0,19 |
| 3 | 92,6 | 5,29 | 1,11 | 0,66 | 0,17 | 0,17 | <500ppm |
| C | 92,6 | 5,07 | 1,14 | 0,7 | 0,17 | 0,16 | 0,16 |

On a comparé les résultats de faisabilité obtenus sur des couples de produits proches en analyse chimique hors phosphore. Des comparaisons entre les exemples 1 et A, 2 et B, et 3 et C n'ont pas permis de détecter de différences en terme de qualité de fabrication des blocs en ce qui concerne la coulabilité du liquide fondu, le remplissage et la fissuration des blocs réalisés.

Ces résultats ont été parfaitement confirmés sur des pièces de 500 x 1100 x 300 mm.

Exemples 4 à 6 et exemples comparatifs D à F

On a soumis à l'essai de cyclage thermique (25 cycles) décrit ci-dessus des échantillons de produits réfractaires selon l'invention (exemples 4 à 6) et de produits réfractaires (exemples D à F) se situant en dehors du cadre de l'invention en raison de leur teneur en $P_2O_5$ nettement plus élevées.

Les échantillons (40 x 40 x 30 mm) ont été prélevés sur des blocs préparés selon le mode opératoire décrit pour les exemples 1-3 ou sur des blocs disponibles dans le commerce (cas de l'exemple comparatif F), à 40 mm du fond du bloc et à 20 mm d'une face latérale. Ces échantillons avaient les compositions chimiques indiquées dans le Tableau 1 ci-après, qui mentionne aussi le rapport dV/V.

**TABLEAU 1**

| Exemples | $ZrO_2$ | $SiO_2$ | $Na_2O$ | $TiO_2$ | $Fe_2O_3$ | $Al_2O_3$ | $P_2O_5$ | dV/V% |
|---|---|---|---|---|---|---|---|---|
| 4 | 96,62 | 2,38 | 0,26 | 0,16 | 0,08 | 0,5 | <500ppm | 2,4 |
| D | 96,38 | 2,55 | 0,25 | 0,16 | 0,08 | 0,43 | 0,15 | 5,4 |
| 5 | 96,58 | 2,56 | 0,19 | 0,15 | 0,07 | 0,45 | <500ppm | 2,8 |
| E | 96,25 | 2,73 | 0,16 | 0,17 | 0,08 | 0,53 | 0,08 | 8,4 |
| 6 | 94,75 | 3,72 | 0,28 | 0,18 | 0,08 | 0,99 | <500ppm | 1,7 |
| F | 93,89 | 4,8 | 0,3 | 0,21 | 0,12 | 0,42 | 0,26 | 31,2 |

On voit que la réduction de la teneur en $P_2O_5$ améliore très notablement le comportement des produits lors du cyclage thermique, en réduisant fortement leur gonflement.

Exemple 7 et exemple comparatif G

On a préparé, selon le mode opératoire décrit à propos des exemples 1 à 3, deux produits réfractaires ayant les compositions suivantes en % en poids :

|  | $ZrO_2$ | $SiO_2$ | $Na_2O$ | $TiO_2$ | $Al_2O_3$ | $P_2O_5$ | $Fe_2O_3$ |
|---|---|---|---|---|---|---|---|
| exemple 7 | 96,39 | 2,70 | 0,23 | 0,10 | 0,50 | 0,03 | 0,05 |
| exemple G | 94,26 | 4,65 | 0,26 | 0,15 | 0,35 | 0,26 | 0,08 |

et on a déterminé de façon qualitative et quantitative le fer métallique libre, les nodules d'aspect métallique et la phase vitreuse en ce qui concerne leurs teneurs en Fe et P.

9

Les résultats obtenus sont récapitulés dans le Tableau 2 ci-après :

**TABLEAU 2**

| Valeurs en ppm | 7 | G |
|---|---|---|
| Fe | teneur en fer total (exprimé en Fe°), | 350 | 595 |
| P | teneur en phosphore total (exprimé en P°) | 130 | 1135 |
| Fe° | teneur en fer sous forme métal libre | 75 | ≃ 0 |
| P | présent dans les nodules d'aspect métallique | 30 | 275 |
| P | oxydé dissous dans la phase vitreuse (exprimé en P°) | 100 | 860 |
| Fe | présent dans les nodules d'aspect métallique, lié à P | 55 | 300 |
| Fe | oxydé dissous dans la phase vitreuse (exprimé en Fe°) | 220 | 295 |

Ex. 7 : produit selon l'invention
Ex. G : produit additionné de phosphore

On voit que dans le produit contenant 0,11% de phosphore exprimé sous forme P° (c'est-à-dire 0,26% exprimé en $P_2O_5$), 0,0275 de P° (soit 25% de la quantité de phosphore totale) se retrouve dans les phases métalliques, le reste étant dissous dans la phase vitreuse sous forme de $P_2O_5$ . Pour ce qui est de l'échantillon à très faible teneur en phosphore, soit 0,013% exprimé en P° (soit 0,03% exprimé en $P_2O_5$), 0,003% de P° (soit environ 25% du total introduit) se concentre dans la phase métallique. Par rapport au cas précédent, l'incidence sur la quantité de phase métallique est alors plus faible puisque le phosphore présent globalement dans le produit est en quantité bien moindre.

Exemple 8 à 10 et exemple comparatif H

Ces exemples illustrent l'influence des proportions relatives de $SiO_2$ et de $Na_2O$ sur le gonflement des produits réfractaires lors de l'essai de cyclage thermique décrit ci-dessus.

A cet effet, on a soumis audit essai divers échantillons ayant des compositions chimiques voisines mais en faisant varier leur teneur en $Na_2O$. Ces compositions chimiques sont indiquées en % en poids dans le Tableau 3 ci-après qui mentionne aussi le rapport dV/V déterminé pour chaque échantillon.

**TABLEAU 3**

| Exemples | $ZrO_2$ | $SiO_2$ | $Na_2O$ | $TiO_2$ | $Fe_2O_3$ | $Al_2O_3$ | $P_2O_5$ | dV/V, % |
|---|---|---|---|---|---|---|---|---|
| 7 | 93,89 | 4,74 | 0,15 | 0,19 | 0,09 | 0,94 | <500ppm | 15,8 |
| 8 | 94,3 | 4,54 | 0,32 | 0,15 | 0,07 | 0,62 | <500ppm | 2,9 |
| 9 | 93,92 | 4,6 | 0,46 | 0,14 | 0,08 | 0,8 | <500ppm | 2,2 |
| 10 | 93,64 | 4,67 | 0,59 | 0,15 | 0,08 | 0,87 | <500ppm | 0,9 |

On voit que pour des produits contenant environ 4,5 à 4,7% de $SiO_2$, la teneur minimale en $Na_2O$, pour obtenir un gonflement acceptable, c'est-à-dire un rapport dV/V inférieur à 5% peut être estimée à environ 0,20% en poids, une teneur d'au moins 0,30% en poids étant préférable pour limiter le gonflement à 3%.

Par ailleurs, il est préférable de ne pas dépasser une teneur en $Na_2O$ de 1% en poids, tout particulièrement de 0,6% en poids. En effet, au-delà de 0,6% en poids, on n'observe pratiquement pas d'inhibition supplémentaire de la formation de zircon et, en outre, on tend à dégrader un peu d'autres propriétés comme la résistance à la corrosion par le verre fondu.

Des essais supplémentaires conduits sur des produits à teneurs en silice plus faibles que celles des exemples 8 à 10, on a trouvé que la teneur en $Na_2O$ pouvait descendre jusqu'à 0,12%, sans qu'on dépasse un gonflement maximum tolérable de 5% pour une teneur en silice de 2% en poids.

Il ressort de ces essais qu'un paramètre important est moins la teneur globale du produit en $Na_2O$ que la concentration de ce dernier dans la phase vitreuse du produit. Il faut donc ajuster la teneur en $Na_2O$ du produit, dans les limites prescrites, en fonction de l'importance de la phase vitreuse et notamment de la teneur en $SiO_2$, des proportions relativement grandes de $Na_2O$ convenant pour être employées conjointement avec des proportions relativement élevées de silice et des proportions relativement faibles de $Na_2O$ convenant pour être employées conjointement avec des proportions relativement basses de silice. Par exemple, on a trouvé que pour limiter le gonflement du produit dans l'essai de cyclage décrit ci-dessus à une valeur inférieure à 3%, il faut une concentration pondérale de $Na_2O$ dans la phase vitreuse supérieure à environ 5%.

Exemples 11 à 13 et exemples comparatifs I à L

Dans ces exemples, on a comparé les comportements vis-à-vis de la corrosion par des verres fondus de trois produits selon l'invention et de quatre produits témoins.

L'essai de corrosion utilisé était l'essai de corrosion dynamique décrit par J. RECASENS, A. SEVIN et M. GARDIOL lors du 8ème Congrès International du verre tenu à Londres du 1 au 6 Juillet 1968.

Les analyses chimiques moyennes des produits soumis à l'essai étaient les suivantes :

| Exemples | $SiO_2$ | $Al_2O_3$ | $Na_2O$ | $P_2O_5$ | $B_2O_3$ | $TiO_2$ | $Fe_2O_3$ | $ZrO_2$ |
|---|---|---|---|---|---|---|---|---|
| I | 5,22 | 1,37 | 0,42 | 0,11 | 0,11 | 0,11 | 0,10 | 92,56 |
| J | 3,38 | 0,28 | 0,19 | 0,20 | 0,014 | 0,16 | 0,10 | 95,67 |
| K | 4,30 | 0,65 | 0,28 | 0,01 | 0,15 | 0,12 | 0,07 | 94,42 |
| L | 5,03 | 0,80 | 0,36 | 0,32 | traces | 0,27 | 0,14 | 93,08 |
| 11 | 3,45 | 0,65 | 0,30 | 0,01 | traces | 0,16 | 0,08 | 95,35 |
| 12 | 4,96 | 0,61 | 0,39 | 0,01 | traces | 0,18 | 0,11 | 93,74 |
| 13 | 5,08 | 0,90 | 0,31 | 0,01 | traces | 0,19 | 0,15 | 93,96 |

Les conditions de l'essai (type de verre, durée, température) et les résultats obtenus, exprimés sous forme d'un indice relatif de résistance à la corrosion, en prenant pour base la résistance du produit selon l'invention, pour chaque type d'essai, sont récapitulés dans le Tableau 4.

Il va de soi que les modes de réalisation décrits ne sont que des exemples et qu'on pourrait les modifier, notamment par substitution d'équivalents techniques sans sortir pour cela du cadre de l'invention.

**TABLEAU 4**

| Type de verre | Température | Durée | Produit de l'exemple | Indice |
|---|---|---|---|---|
| Borosilicate | 1600°C | 51 heures | I | 97 |
| | 1600°C | 51 heures | 11 | 100 |
| Alcali résistant | 1550°C | 72 heures | J | 92 |
| | 1550°C | 72 heures | K | 89 |
| | 1550°C | 72 heures | 12 | 100 |
| Sodocalcique | 1550°C | 24 heures | L | 95 |
| | 1550°C | 24 heures | 12 | 100 |
| Sodocalcique | 1500°C | 48 heures | L | 93 |
| | 1500°C | 48 heures | 13 | 100 |

**Revendications**

1. Un produit réfractaire non fissuré obtenu par fusion dans des conditions oxydantes et coulée d'un mélange de matières premières tel que le produit obtenu ait la composition chimique pondérale moyenne, en % en poids sur la base des oxydes suivants :

| | |
|---|---|
| - $ZrO_2$ | > 92 |
| - $SiO_2$ | 2 - 6,5 |
| - $Na_2O$ | 0,12-1,0 |
| - $Al_2O_3$ | 0,4-1,15 |
| - $Fe_2O_3$ + $TiO_2$ | < 0,55 |
| - $P_2O_5$ | < 0,05. |

2. Un produit réfractaire selon la revendication 1, caractérisée, ce qu'il présente la composition chimique pondérale moyenne, en % en poids sur la base des oxydes, suivante :

| | |
|---|---|
| - $ZrO_2$ | > 92 |
| - $SiO_2$ | 3 - 6 |
| - $Na_2O$ | 0,2-0,6 |
| - $Al_2O_3$ | 0,4-1,0 |
| - $Fe_2O_3$ + $TiO_2$ | < 0,3 |
| - $P_2O_5$ | < 0,03. |

**Claims**

1. A refractory product free of cracks obtained by fusing under oxidizing conditions and casting a mixture of starting materials such that the resultant product has the following average chemical composition by weight, in % by weight based on the oxides :

| | |
|---|---|
| - $ZrO_2$ | > 92 |
| - $SiO_2$ | 2 - 6.5 |
| - $Na_2O$ | 0.12-1.0 |
| - $Al_2O_3$ | 0.4-1.15 |
| - $Fe_2O_3$ + $TiO_2$ | < 0.55 |
| - $P_2O_5$ | < 0.05. |

2. A refractory product according to Claim 1, characterized in that it has the following average chemical composition by weight, in % by weight based on the oxides :

| | |
|---|---|
| - $ZrO_2$ | > 92 |
| - $SiO_2$ | 3 - 6 |
| - $Na_2O$ | 0.2-0.6 |
| - $Al_2O_3$ | 0.4-1.0 |
| - $Fe_2O_3$ + $TiO_2$ | < 0.3 |
| - $P_2O_5$ | < 0.03 |

**Patentansprüche**

1. Feuerfestes, rißfreies Produkt, erhalten durch Schmelzen unter oxidativen Bedingungen und Gießen einer Mischung aus Rohstoffen, so daß das erhaltene Produkt die gewichtsgemittelte chemische

16

EP 0 403 387 B1

Zusammensetzung in Gew.-% auf der Grundlage folgender Oxide aufweist:

| | |
|---|---|
| - $ZrO_2$ | >92 |
| - $SiO_2$ | 2 - 6,5 |
| - $Na_2O$ | 0,12 -1,0 |
| - $Al_2O_3$ | 0,4 - 1,15 |
| - $Fe_2O_3$ + $TiO_2$ | <0,55 |
| - $P_2O_5$ | <0,05 |

2. Feuerfestes Produkt nach Anspruch 1, dadurch gekennzeichnet, daß es die gewichtsgemittelte chemische Zusammensetzung in Gew.-% auf der Grundlage folgender Oxide aufweist:

| | |
|---|---|
| - $ZrO_2$ | >92 |
| - $SiO_2$ | 3 - 6 |
| - $Na_2O$ | 0,2 -0,6 |
| - $Al_2O_3$ | 0,4 - 1,0 |
| - $Fe_2O_3$ + $TiO_2$ | <0,3 |
| - $P_2O_5$ | <0,03 |

17